# EUROPÄISCHE PATENTSCHRIFT

(11) **EP 3 135 636 B1**
(45) Veröffentlichungstag und Bekanntmachung des Hinweises auf die Patenterteilung: **05.06.2019**
(21) Anmeldenummer: 15182967.8
(22) Anmeldetag: 28.08.2015
(51) Int. Cl.: C02F 3/12, C02F 1/00, B01D 29/66, C02F 3/00

(54) **KLÄRANLAGE**
SEWAGE SYSTEM
STATION D'EPURATION

(43) Veröffentlichungstag der Anmeldung: 01.03.2017
(73) Patentinhaber: KLARO GmbH, 95447 Bayreuth (DE)
(72) Erfinder: Graf, Otto P., 79331 Teningen (DE)
(74) Vertreter: Grünecker Patent- und Rechtsanwälte PartG mbB

(56) Entgegenhaltungen:
- WO-A1-2012/154135
- CN-A- 104 193 027
- Wilhelm Hosang & Wolfgang Bischof: "Abwassertechnik", 1. Januar 1998 (1998-01-01), B.G. Teubner, Stuttgart & Leipzig, XP002750902, ISBN: 3-519-15247-9 Seiten 556-573, * Absatz [04.5] * * Abbildung 4.201 *

## Beschreibung

Die Erfindung betrifft eine Kläranlage gemäß Oberbegriff des Patentanspruchs 1 sowie ein Verfahren gemäß Oberbegriff des Patentanspruchs 12.

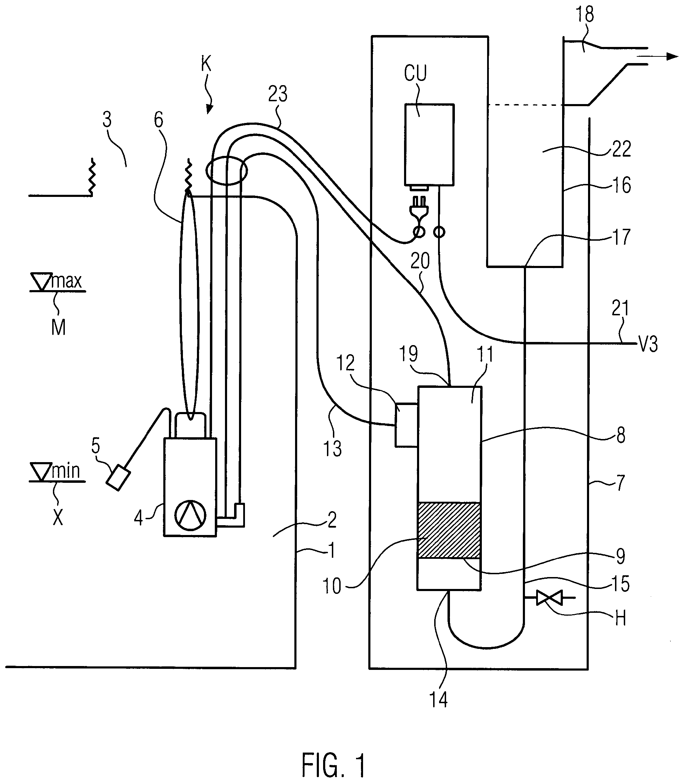

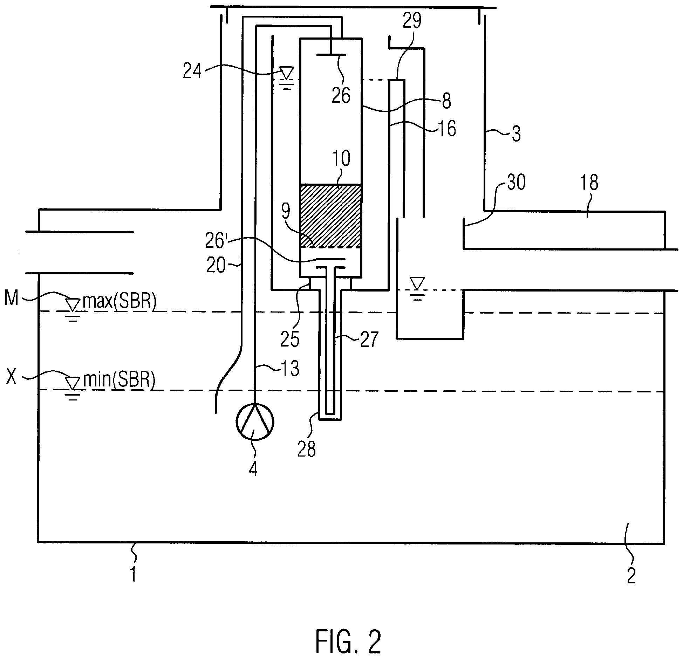

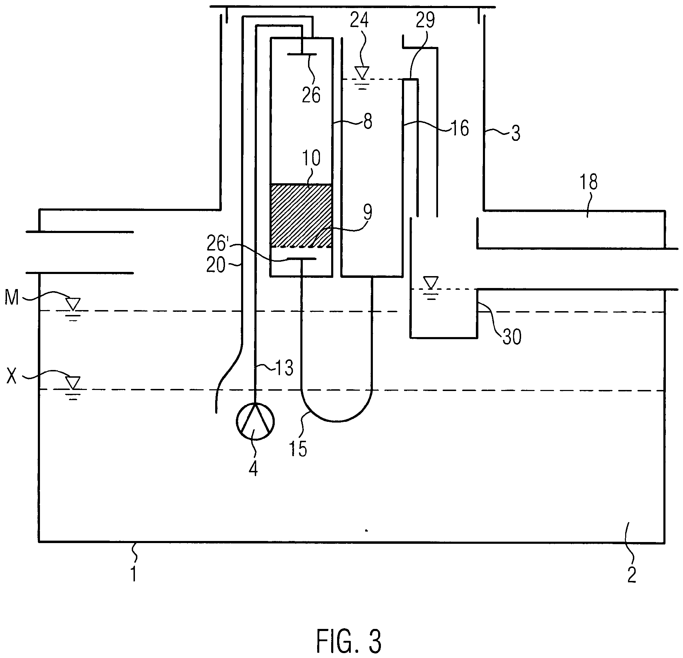

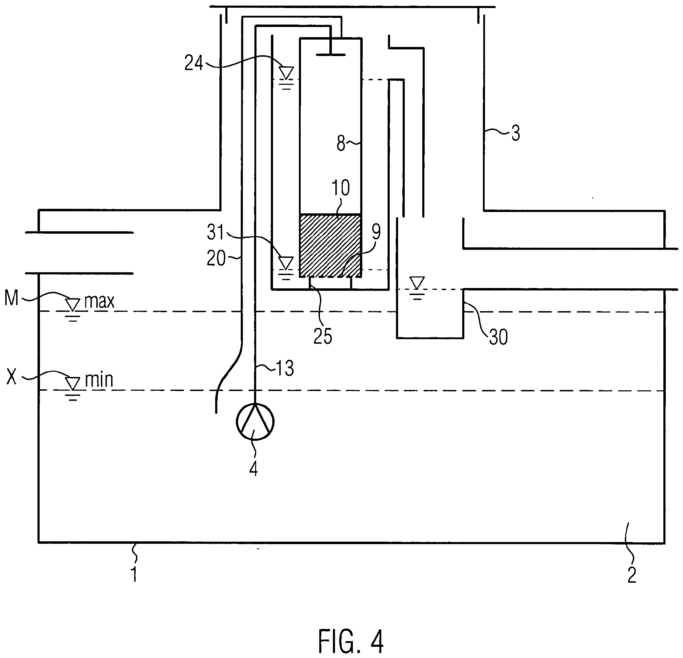

Bei einer aus WO 2012/154135 A1 bekannten Kläranlage sind in der Ausführungsform in Fig. 1 als Pumpen drei Druckluftheber vorgesehen. Der dem Zulauf nächste Druckluftheber dient zum Überführen von Schlamm. Der mittlere Druckluftheber dient zum Absenken des Niveaus in einer separaten Pumpenkammer, um einen Rückspülzyklus des Filters unter Schwerkraft durchzuführen. Der rechte Druckluftheber dient zum Abziehen von Klarwasser aus der Kläranlage. Die Filterschüttung wird im Normalbetrieb beim Abziehen von Klarwasser von unten nach oben durchströmt, hingegen bei einem Rückspülzyklus von oben nach unten. In den Ausführungsformen der Fig. 2 und 3 wird behandeltes Abwasser ohne Pumpwirkung abgezogen und ist nur ein Druckluftheber oder eine Schlammpumpe in einem Zwischenabschnitt der Kläranlage installiert, die bzw. der für einen Rückspülzyklus des Filters in Betrieb genommen werden muss, um das Niveau in der Pumpenkammer ausreichend weit abzusenken. In jeder Ausführungsform muss zum Einleiten eines Rückspülzyklus ein Druckluftheber oder eine Pumpe in der Pumpenkammer in Betrieb genommen werden. Dieser Pumpbetrieb muss während der Rückspülung des Filters aufrechtgehalten werden, damit das Abwasserniveau in der Pumpenkammer trotz von oben nachlaufendem Abwasser ausreichend niedrig bleibt. Ein Raum im Filtergehäuse oberhalb der Filterschüttung bildet das Rückspülreservoir für bereits behandeltes Abwasser zum Rückspülen. Aus Wilhelm Hosang und Wolfgang Bischoff, "Abwassertechnik", 01.01.1998, XP002750902, Seiten 556 - 573, ist in der Abbildung 4.20-1 eine Kleinkläranlage mit Flockungsfiltration bekannt, bei der eine erste Pumpe ein Nachklärbecken mit einem Zulauf zu einem Belüftungsbecken verbindet, wobei das Nachklärbecken aus dem Belüftungsbecken gespeist wird. Zwischen dem Nachklärbecken und einem Zwischenspeicher ist eine zweite Pumpe angeordnet. Der Zwischenspeicher ist an die Druckseite der zweiten Seite angeschlossen und weist einen zu einem Flockungsfilter führenden Überlauf auf.

Bei einer aus CN 104193027 A bekannten Filtrieranlage in einem Druckkessel erfolgt der Zulauf über eine Pumpe und ein Wegeventil.

Im Ablaufbereich von Kläranlagen, insbesondere Klein-Kläranlagen zum biologischen Behandeln von Abwasser, verbleiben im Abwasser stets mehr oder weniger Schwebstoffe, die sich in der Absetzphase bzw. bei der Nachklärung nicht absetzen konnten. Um beispielsweise das behandelte Abwasser als Brauchwasser weiter verwenden zu können, wäre jedoch hohe Qualität des abgezogenen Abwassers von Anfang an erforderlich, die wegen der Schwebstoffe bisher nicht erreichbar ist. Insbesondere im Falle einer eventuell nachgeschaltete Desinfektionsstufe haben diese Schwebstoffe einen negativen Einfluss auf die Desinfektionsleistung und das Wiederverkeimungspotenzial des behandelten Wassers. Die gängigen, besonders bei größeren Kläranlagen eingesetzten, Filtrationsverfahren sind für kleine Kläranlagengrößen meist nicht zweckmäßig. So benötigt z.B. die in offenen Becken durchgeführte Schnellfiltration große Flächen und Becken, die sauberes Wasser zur Rückspülung der Filterschüttung vorhalten. Gängige Druckfiltrationsverfahren benötigen gewöhnlich neben einem relativ großen vorzuhaltenden Rückspülvolumen eigens für die Rückspülung installierte Pumpen und Ventile. Oberflächenfiltrationsverfahren, wie die Membranfiltration sind teuer in Anschaffung, Betrieb und Wartung. Der erwähnte technische Aufwand, der Platzbedarf, die Wartungsintensität, Investitions- und Betriebskosten sowie die relativ komplexe Steuerung solcher Filtrationsverfahren sind im Bereich dezentraler kleiner Kläranlagen nicht zu rechtfertigen.

Der Erfindung liegt die Aufgabe zugrunde, eine kostengünstige und einfache Lösung des Problems, verursacht durch Schwebstoffe, anzugeben, die geringen technischen Aufwand, geringe Wartungsintensität und geringen Platzbedarf hat, und insbesondere für Klein-Kläranlagen und kleinere Kläranlagen zweckmäßig ist.

Die gestellte Aufgabe wird mit den Merkmalen des Patentanspruchs 1 und verfahrensgemäß mit den Merkmalen des Patentanspruchs 12 gelöst.

In der Kläranlage wird durch die Rückhaltung der Schwebstoffe im Filter die Qualität des geklärten Wassers deutlich verbessert, so dass dieses z.B. als Brauchwasser problemlos weiter verwendet werden kann. Da der Filter mit im Rückspülreservoir gespeichertem, bereits behandeltem Wasser ausschließlich durch Schwerkraft rückspülbar ist, bleibt der technische Aufwand für diese Mehrausstattung der Kläranlage gering, wie auch die Wartungsintensität, und wird nur wenig Platz beansprucht. Denn es entfallen zusätzliche Leitungen, Ventile, eine Rückspülsteuerung, gegebenenfalls eine zusätzliche Pumpe und dergleichen, da ausschließlich Schwerkraft eingesetzt wird, um in Förderpausen (z.B. Absetzphasen) den Filter rückzuspülen. Dabei sind die Pumpe über eine in den Freibord des Filters mündende Druckleitung mit dem Filter, und der Filter über eine unten angeschlossene Verbindungsleitung mit der Bodenseite des Rückspülreservoirs verbunden, so dass die Filterschüttung von oben nach unten durchströmt wird, wenn die Pumpe in Betrieb ist, hingegen von unten nach oben rückgespült wird, sobald die Pumpe abgeschaltet ist, wobei dann der gesamte Höhenunterschied zwischen dem Boden oberhalb des maximalen Füllniveaus des Klärbeckens angeordneten des Rückspülreservoirs und dem jeweiligen Füllniveau des Klärbeckens zum Rückspülen nutzbar ist. An den Filter ist eine Entlüftungsleitung angeschlossen, die unterhalb des minimalen Füllniveaus im Klärbecken oder oberhalb der Höhe des Trägersiebs mündet, und jederzeit eine Entlüftung des Filters nach Rückspülung des Filters bzw. nach Wartungsarbeiten durch die Pumpwirkung der Pumpe ermöglicht. Ein intermittierender Betrieb von Filtration und Rückspülung im Abstand von nur wenigen Minuten ist aufgrund des einfachen und, bis auf die Pumpe, verschleißfreien Aufbaus ohne Weiteres möglich und ermöglicht trotz hohen Filtrationsgeschwindigkeiten besonders kleine Filter- und Rückspülvolumina:
Verfahrensgemäß pumpt die Pumpe nach Absetzen des Belebtschlamms im Klärbecken das gegebenenfalls noch Schwebstoffe enthaltende, geklärte Wasser durch den Filter, wobei die Schwebstoffe durch Tiefenfiltration zurückgehalten werden. Dabei wird das Rückspülreservoir zunächst gefüllt und läuft weiterhin gepumptes, behandeltes Wasser über den Ablauf ab, wobei jedoch eine Charge im Rückspülreservoir verbleibt. Nach Abschalten der Pumpe läuft die Charge aus dem Rückspülreservoir in der Gegenrichtung durch den Filter und die Pumpe zurück in das Klärbecken. Zuvor zurückgehaltene Verschmutzungen werden so wieder in die Kläranlage gespült, wobei der Filter regeneriert und seine ursprüngliche Filterleistung zumindest weitestgehend oder sogar vollständig wieder hergestellt wird.

In einer zweckmäßigen Ausführungsform der Kläranlage ist der Filter ein Einschicht- oder Mehrschicht-Schüttungsfilter, der überwiegend mit Tiefenfiltration arbeitet, und einen Filterbehälter, darin wenigstens ein Trägersieb für wenigstens eine Filterschüttung und einen oberhalb der Filterschüttung vorgesehenen Freibord oder Freiraum aufweist. Es kann mit sehr hohen Filtrationsgeschwindigkeiten gearbeitet werden, und kann die Schüttungshöhe relativ gering sein, um dennoch eine gute Rückhaltung der Verschmutzungen ohne Durchbruch der Schmutzfracht zu erzielen. Dies trägt auch zu sehr platzsparenden Abmessungen bei, so dass der Filter und/oder das Rückspülreservoir ohne Weiteres z.B. innerhalb der Kläranlage verbaut werden können.

Zweckmäßig umfasst die Filterschüttung als Filtermaterial Sand und/oder Kohle und/oder Glas und/oder Kunststoffgranulat, d.h. körniges Filtermaterial, das bei geringer Schüttungshöhe wünschenswert hohe Filtrationsgeschwindigkeiten und gute Rückhaltung ermöglicht.

Die Pumpe ist zweckmäßig eine Schmutzwasserpumpe und entweder im Klärbecken verbaut, oder trocken in der Kläranlage oder außerhalb derselben installiert und dann über einen Ansaugschlauch mit einem Bereich unterhalb des minimalen Füllniveaus verbunden. Zweckmäßig befindet sich der Ansaugbereich der Pumpe knapp unterhalb des minimalen Füllstands des Klärbeckens, sodass weder tiefer liegender, abgesetzter Schlamm noch schwimmende Verunreinigungen angesaugt werden können. Außerdem ist die Pumpe zweckmäßig eine Strömungspumpe, so dass bei abgeschalteter Pumpe eine Durchströmung der Pumpe entgegengesetzt zur eigentlichen Pumprichtung möglich ist.

Wird der Filter an eine oberirdisch aufgestellte Kläranlage, z.B. zur Nachrüstung einer Container-Kläranlage, angeschlossen, ist es zweckmäßig, dass der Ablauf, der Filter und das Rückspülreservoir außerhalb des Klärbeckens angeordnet sind, beispielsweise an einer Montageplatte, die an der Kläranlage montierbar oder daneben aufstellbar ist. In einer baulich einfachen Ausführungsform sind die Pumpe über eine in den Freibord des Filters mündende Druckleitung mit dem Filter, und der Filter über eine unten angeschlossene Verbindungsleitung mit der Bodenseite des Rückspülreservoirs verbunden, so dass die Filterschüttung von oben nach unten durchströmt wird, wenn die Pumpe in Betrieb ist, hingegen von unten nach oben rückgespült wird, sobald die Pumpe abgeschaltet ist, wobei dann der gesamte Höhenunterschied zwischen dem Boden des Rückspülreservoirs und dem jeweiligen Füllniveau des Klärbeckens zum Rückspülen nutzbar ist.

Der tiefste Punkt der Verbindungsleitung zwischen Rückspülreservoir und Filter liegt zweckmäßig unterhalb des minimalen Füllniveaus im Klärbecken, um eine unkontrollierte Lüftspülung und eine damit einhergehende Durchmischung eines Mehrschichtfilterbetts am Ende des Rückspülvorgangs zu vermeiden. In diesem Fall spielt die relative Lage des Filtergehäuses zum Füllniveau im Klärbecken keine Rolle für die Funktion des Filters.

Weiterhin lässt sich der Strömungsquerschnitt der Verbindung zwischen Rückspülreservoir und Filter nach folgenden zwei Kriterien wählen: Der Querschnitt soll so klein wie möglich sein, um bei im Klärbecken steigendem Füllniveau das dem Filter zulaufenden mit Schmutz beladene Wasservolumen so gering wie möglich zu halten. Der Querschnitt muss jedoch groß genug sein, um eine ausreichende Rückspülgeschwindigkeit im Filter gewährleisten zu können.

Für den Einsatz des Filters bei Kläranlagen in unterirdischen Tanks ist eine kompaktere Ausführungsform von Vorteil, die auf die unterhalb des minimalen Füllniveaus des Klärbeckens liegende Verbindung zwischen Filter und Reservoir verzichtet. Dabei steht das vorzugsweise runde Filtergehäuse in dem Rückspülreservoir, welches oberhalb des maximalen Füllniveaus des Klärbeckens positioniert ist. Das Rückspülreservoir samt Filtergehäuse kann sowohl innerhalb der Kläranlage (z.B. in einem Schacht) als auch außerhalb der Kläranlage (z.B. in einem eigenen Gehäuse) in unmittelbarer Nähe zu dieser positioniert sein. Die Pumpe ist z.B. im Klärbecken positioniert. Die Verbindung zwischen Pumpe und Filter mündet im oben gelegenen Freibord des Filters. Das Filtergehäuse schließt unten mit dem Trägersieb ab, ist also offen, und steht frei auf Abstandshaltern auf dem Boden des Rückspülreservoirs. Bei laufender Pumpe wird so die Filterschüttung von oben nach unten durchströmt und das Reservoir füllt sich mit Wasser z.B. bis zu einem Überlauf. Wird die Pumpe abgeschaltet, läuft das im Rückspülreservoir stehende Wasser durch den Höhenunterschied zurück und bewirkt somit die Auflockerung und Rückspülung der Filterschüttung. Sobald der Wasserstand im Rückspülreservoir das Niveau des Trägersiebs des Filtergehäuses erreicht, dringt Luft in das Filtergehäuse, wodurch die Rückspülung selbsttätig beendet wird. Dies ermöglicht den Einbau des Filters mit noch weniger vertikalem Platzbedarf und Aufwand, sowie einer sehr einfachen Wartung des Filtergehäuses bzw. eines einfachen Wechsels und Überprüfung der Filterschüttung, da dieses nach Abkupplung des Pumpenschlauches einfach aus der Anlage ohne ein Lösen weiterer Verbindungen entnommen werden kann.

Eine weitere Ausführungsform verbindet den Verzicht auf eine unterhalb des minimalen Füllniveaus des Klärbeckens liegende Verbindung zwischen Rückspülreservoir und Filtergehäuse, verhindert jedoch durch die geeignete Positionierung und Dimensionierung der Entlüftungsleitung (ein Schlauch) eine unkontrollierte Luftspülung der Filterschüttung, wodurch eine Auslegung als Mehrschichtfilter möglich ist. Dabei endet die Entlüftungsleitung nicht unterhalb des minimalen Wasserstandes im Klärbecken, sondern knapp oberhalb des Niveaus des Trägersiebs des Filtergehäuses. Nach einem Filtrationsvorgang läuft nach Abschalten der Pumpe das im Rückspülreservoir vorgehaltene Wasser aufgrund der hydrostatischen Druckdifferenz durch den Pumpenschlauch und die Entlüftungsleitung zurück in das Klärbecken. Sobald der Wasserpegel im Rückspülreservoir das Niveau des Endes der Entlüftungsleitung erreicht, kehrt sich die Strömungsrichtung in der Entlüftungsleitung um. Dadurch dringt Luft ein und die Rückspülung wird unterbrochen, bevor Luft von unten in die Filterschüttung eindringen kann. Der Vorteil dieser Ausführungsform ist die besonders kompakte und wartungsfreundliche Bauweise, die eine effiziente Mehrschichtfiltration erlaubt.

Bei allen Ausführungen sind die Verbindungen oben und unten am Filtergehäuse so gestaltet, dass die Strömung nicht direkt bzw. gebündelt auf die Filterbettschüttung gerichtet ist, z.B. in Form eines Verteilers, wie einer Prallplatte, eines Rohrbogens oder eines Rohrabzweigs. Während des Filtrationsvorgangs wird so verhindert, dass die obere Schicht der Filterschüttung aufgewirbelt wird. Während der Rückspülung wird damit gewährleistet, dass eine über die Fläche gleichmäßige Auflockerung und Reinigung der Filterschüttung erfolgt.

Verfahrensgemäß wird das behandelte Abwasser mit einer Filtrationsgeschwindigkeit bis zu 300 m/h durch den Filter gepumpt. Diese hohe Filtrationsgeschwindigkeit ohne einen Durchbruch der Schmutzfracht wird durch die häufige Rückspülung ermöglicht.

Dies wird durch den relativ kleinen Filter und die geringe Schüttungshöhe der Filterschüttung ermöglicht, welche eine sehr gute Rückhaltung der Verschmutzungen ohne Durchbruch der Schmutzfracht erreichen lässt. Beispielsweise wird der Filter jeweils nach 1,5 bis 7,5 Minuten, beispielsweise alle 2 bis 5 Minuten, mindestens jedoch einmal pro Klärzyklus, für 1 bis 3 Minuten rückgespült. Aufgrund einer derart häufigen Rückspülung reicht ein relativ kleines Rückspülreservoir aus und es kommt, trotz der hohen Filtrationsgeschwindigkeiten und der geringen Schüttungshöhe, nicht zum Durchbruch der Schmutzfracht. Die hohe Filtrationsgeschwindigkeit ermöglicht den Einsatz des Filters in SBR-Kläranlagen, bei denen verfahrensgemäß eine große Charge geklärten Abwassers innerhalb einer relativ kurzen Zeitspanne aus dem Klärbecken abgezogen werden muss.

Für das Rückspülreservoir ist ein Fassungsvermögen des 1,5- bis 2-Fachen des Volumens des Filtergehäuses ausreichend um eine ausreichende Regeneration des Filtervermögens zu erreichen.

Durch die Anpassung der Filterfläche bzw. des -volumens kann eine weite Spanne an Kläranlagengrößen abgedeckt werden.

Es kann für die Pumpe eine Steuerung zur Taktung von Filter-Rückspülzyklen vorgesehen sein, die einfach aufgebaut ist und beispielsweise mit Zeitgliedern arbeitet, die die Länge der Rückspülzyklen und Pausen dazwischen einstellen lassen, bzw. Einschalt- und Abschaltzeiten der Pumpe.

Grundsätzlich wird der Filter relativ häufig rückgespült, ohne einen bestimmten Druckverlust beim Pumpen abzuwarten oder zu ermitteln.

Kurze Zeitabstände zwischen den Rückspülungen verringern das Risiko von Verklumpungen in der Filterschüttung durch anhaftenden Bakterienbewuchs und Schmutzpartikel, die zum Austrag von Filtermaterial während der Rückspülung führen können.

Durch die Rückspülung mit einem geringem Volumen direkt nach der Filtration nach jedem Abzug von Klarwasser aus der Kläranlage wird eine Stoßbelastung der Kläranlage durch große Mengen an Spülwasser vermieden, was insbesondere bei kleinen Kläranlagen mit geringer Pufferkapazität von Bedeutung ist.

Aufgrund der kurzen Filtrationszyklen zwischen den Rückspülungen steigt der Druck während eines Filtrationszyklus nur minimal an bzw. der Volumenstrom nimmt nur minimal ab. Dieser annähernd konstante Volumenstrom ermöglicht eine technisch einfache, volumenproportionale Dosierung von z.B. Desinfektionsmittel, wie z.B. einer Natriumhypochloritlösung, nach dem Filter.

Wenn das unten verschlossene Filtergehäuse auf dem Boden des Rückspülreservoirs steht, z.B. mit Füßen, kann ein den Boden des Filtergehäuses durchsetzendes Tauchrohr aus dem Filtergehäuse bis unter das minimale Füllniveau in einen im Boden des Rückspülreservoirs vorgesehenen, gegenüber dem Klärbecken verschlossenen Topf hineingreifen. Dies verbessert das Strömungsverhalten beim Pumpen und Rückspülen.

Anhand der Zeichnung werden Ausführungsformen des Erfindungsgegenstandes erläutert. Es zeigen:
- Fig. 1: eine Schemadarstellung einer Kläranlage mit erfindungsgemäßer Ausstattung, wobei hier einige Komponenten außerhalb der Kläranlage gezeigt sind, die in anderen Ausführungsformen auch innerhalb der Kläranlage verbaut sein könnten, und
- Fig. 2-6: weitere Ausführungsformen.

Von einer Kläranlage K ist in Fig. 1 ein Behälter 1 angedeutet, der zumindest ein Klärbecken 2, z.B. zur Absetzung schwerer Inhaltsstoffe aus Abwasser bzw. zur Nachklärung bildet. Im Klärbecken 2 ist ein maximales Füllniveau M und ein minimales Füllniveau X vorgegeben. Zugang zum Klärbecken 2 ist beispielsweise durch ein Mannloch oder einen Dom 3 möglich.

In der gezeigten Ausführungsform befindet sich in der Abscheidekammer 2 eine Pumpe 4, beispielsweise eine Schmutzwasserpumpe, beispielsweise mit einem Schwimmer 5, deren Ansaugbereich knapp unterhalb des minimalen Füllniveaus X angeordnet ist. Die Pumpe 4 ist beispielsweise mit einer Abhängung 6 im Dom 3 gehaltert.

Außerhalb der Kläranlage K, beispielsweise auf einer Montageplatte 7, ist ein Filter 8 mit einem geschlossenen Filtergehäuse, wenigstens einem Trägersieb 9 und einer Filterschüttung 10 mit drüber freigelassenem Freibord 11 angebracht, der obenliegend mit einem Verteiler 12 an eine Druckleitung 13 zur Druckseite der Pumpe 4 angeschlossen ist. An einem bodenseitigen Anschluss 14 des Filters 6 ist eine Verbindungsleitung 15 zu einem bodenseitigen Anschluss 17 eines als separater Behälter ausgebildeten Rückspülreservoirs 16 angeschlossen. Das Rückspülreservoir 16 ist einem Ablauf 18 der Kläranlage K zugeordnet, der in der gezeigten Ausführungsform außerhalb der Kläranlage angeordnet ist.

An einem oberseitigen Anschluss 19 des Filters 8 ist eine Entlüftungsleitung 20 angeschlossen, die, vorzugsweise, unterhalb des minimalen Füllniveaus X in der Abscheidekammer 2 mündet.

Die Kläranlage kann zusätzlich mit einer Steuerung CU, hier an der Montageplatte 7, ausgestattet sein, die mit der Pumpe 4 verbunden ist und zur Taktung von Rückspülzyklen des Filters 8 bzw. Einschalt- und Abschaltzeiten der Pumpe 4 nutzbar ist, und beispielsweise Zeitglieder enthält, die bedarfsabhängige Einstellungen der Zyklen ermöglichen. Die Steuerung CU ist beispielsweise über eine Leitung 23 mit der Pumpe 4 verbunden, und erhält ihre Arbeitsenergie über eine Leitung 21.

Der Filter 8 ist so verbaut, dass er sich beispielsweise z.T. oberhalb und z.T. unterhalb des minimalen Füllniveaus X befinden kann. Das Rückspülreservoir 16 hingegen ist so verbaut, dass sein Boden oberhalb des maximalen Füllniveaus M liegt. Das Rückspülreservoir 16 kann oben offen sein, beispielsweise um eine Probenahme zu ermöglichen. Der Ablauf 18 ist dem Rückspülreservoir 16 so zugeordnet, dass stets mindestens eine Charge 22 bestimmter Menge im Rückspülreservoir 16 verbleibt.

Bei einer alternativen, nicht gezeigten Ausführungsform kann die Pumpe 4 trocken in der Kläranlage verbaut sein, oder außerhalb der Kläranlage K installiert werden, wobei dann ein Ansaugschlauch zu einem Bereich unterhalb des minimalen Füllniveaus X führt. Bei einer anderen Alternative könnte zumindest der Filter 8 in der Abscheidekammer 2 verbaut sein, und/oder sogar das Rückspülreservoir 16, und gegebenenfalls sogar die Steuerung CU.

Die Filterschüttung 10 kann als Einschicht- oder Mehrschichtfilter ausgelegt und betrieben werden. Als Filtermaterial kann Sand, Kohle, Glas oder Kunststoffgranulat eingesetzt werden. Die Verbindungsleitung 15 kann einen Ablasshahn H aufweisen.

### Funktion:

Nach Absetzen von Belebtschlamm im Klärbecken 2, mit gegebenenfalls weiterhin im behandelten Wasser enthaltenen Schwebstoffen, die sich während der Absetzphase bzw. der Nachklärung nicht absetzen, pumpt die Pumpe 4 das behandelte, gegebenenfalls die Schwebstoffe enthaltende Wasser durch den Filter 8 und die Filterschüttung 10, wobei die Schwebstoffe durch Tiefenfiltration in der Filterschüttung zurückgehalten werden. Lufteinschlüsse in der Druckleitung 13, die sich während der Belüftungsphase des biologischen Klärprozesses dort sammelten, können über die Entlüftungsleitung 20 aus dem Filter 8 ausgetrieben und in das Klärbecken 2 zurückgeführt werden. Das gefilterte Wasser wird in das Rückspülreservoir 16 nach oben gepumpt, füllt dieses, und läuft oben über den Ablauf 18 ab, wobei die Charge 22 im Rückspülreservoir 16 verbleibt.

Nach Abschalten der Pumpe 4 läuft stets die Charge 22 aus dem Rückspülreservoir 16 durch Schwerkrafteinfluss durch den Filter 8 und die Pumpe 4 zurück in das Klärbecken 2, sofern die Abschaltpause der Pumpe 4 ausreichend lang bemessen ist. Dabei wird die Filterschüttung 10 aufgewirbelt oder nur gespült und wird zurückgehaltener Schmutz durch die Pumpe 4 in das Klärbecken 2 gespült. Der Filter 8 wird so weitestgehend oder vollständig regeneriert und erhält wieder seine ursprüngliche Filterleistung, nachdem sich die Filterschüttung während der Pumpphase mit Partikeln zumindest einigermaßen zugesetzt haben kann. Alternativ könnte in der Druckleitung 13 eine selbsttätig vom Förderdruck geschlossen gehaltene, beim Rückspülen direkt, d.h. unter Umgehen der Pumpe 4, in das Klärbecken 2 öffnende Klappe oder ein entsprechendes Ventil vorgesehen sein.

Der Filter 8 bzw. die Filterschüttung 10 wird ausschließlich durch Nutzen der Schwerkraft rückgespült und regeneriert, und zwar ohne Ventile, zusätzliche Pumpen, Leitungen oder manuelle Eingriffe. Der Filter 8 wird häufig rückgespült, gegebenenfalls dabei zeitlich getaktet, ohne einen bestimmten Druckverlust oder dergleichen abzuwarten. Ein Rückspülzyklus von etwa 1 bis 3 Minuten kann alle 2 bis 5 Minuten erfolgen. Durch die häufige Rückspülung des Filters und dessen Auslegung als ein Einschicht- oder Mehrschichtfilter lässt sich dieser mit sehr hohen Filtrationsgeschwindigkeiten von bis zu 300 m/h und geringen Schüttungshöhen von nur etwa 30 cm betreiben, wobei trotzdem eine gute Rückhaltung von Verschmutzungen ohne Durchbruch der Schmutzfracht sichergestellt wird. Die hohe Filtrationsgeschwindigkeit und die geringe Schüttungshöhe ermöglichen sehr platzsparende Abmessungen des Filters, so dass dieser durchaus auch innerhalb der Kläranlage K verbaut werden könnte. Aufgrund der häufigen Rückspülung reicht ein sehr kleines Rückspülreservoir 16 für die Charge aus, beispielsweise nur ca. 15 bis 30 I, wodurch auch das Rückspülreservoir 16 sehr kleine Abmessungen haben kann.

In der Ausführungsform in Fig. 2 sind der Filter 8 und das Rückspülreservoir 16 in der Kläranlage verbaut, beispielsweise zum Teil im Dom 3 des Behälters 1. Dabei ist der Filter 8 im oben offenen Rückspülreservoir 16 untergebracht, beispielweise stehend mit Füßen 25 auf dem Boden des Rückspülreservoirs 16. Das Filtergehäuse des Filters 8 ist im Abstand unterhalb des Trägers 9 verschlossen und weist ein über einen Verteiler 26' speisbares Tauchrohr 27 auf, das durch den Boden des Filtergehäuses und den Boden des Rückspülreservoirs 16 nach unten bis unter das minimale Füllniveau X reicht, und zwar in einem am Boden des Rückspülreservoirs 16 angebrachten, gegenüber dem Klärbecken 2 verschlossen Topf 28. Die Entlüftungsleitung 20 mündet unterhalb des minimalen Füllniveaus X. Das maximale Niveau im Rückspülreservoir 16 wird durch eine Überlaufschwelle 29 bei 24 begrenzt. Die Pumpenleitung 13 mündet in Freibord des Filters 8 mit einem Verteiler 26. Von der Überlaufschwelle 29 erstreckt sich ein Rohr in einen nachgeschalteten Behälter 30 (Probenahmebehälter). Weil der Topf 28 und das Tauchrohr bis unter das minimale Füllniveau X reichen, wird eine Luftspülung der Filterschüttung am Ende der Rückspülphase vermieden, wodurch eine Auslegung des Filters als Mehrschichtfilter möglich ist.

In der Ausführungsform in Fig. 3 sind der Filter 8 und das Rückspülreservoir 16 in etwa auf gleicher Höhe überwiegend in Dom 3 des Behälters 1 nebeneinander stehend verbaut, und über die Verbindungsleitung 15 in ihren Bodenbereichen verbunden. Das Rückspülreservoir 16 speist über die Überlaufschwelle 29 den als Probenahmebehälter vorgesehenen Behälter 30, aus welchem der Ablauf 18 herausführt.

In der Ausführungsform in Fig. 4 ist der Filter 8 mit seinem Filtergehäuse im Rückspülreservoir 16 platziert, und zwar unten im Bereich des Trägersiebs 9 offen auf Füßen 25 auf dem Boden des Rückspülreservoirs 16. Das maximale Niveau im Rückspülreservoir 16 wird durch die Überlaufschwelle 29 bei 24 definiert. Das minimale Niveau im Rückspülreservoir 16 nach einem Rückspülzyklus liegt beispielsweise bei 31 geringfügig oberhalb der Höhe des Trägersiebs 9. Die Entlüftungsleitung 20 mündet in Klärbecken 2 unterhalb des minimalen Füllniveaus X.

In der Ausführungsform in Fig. 4 sind der Filter 8 und das Rückspülreservoir 16 zum größten Teil im Dom 3 des Behälters 1 verbaut.

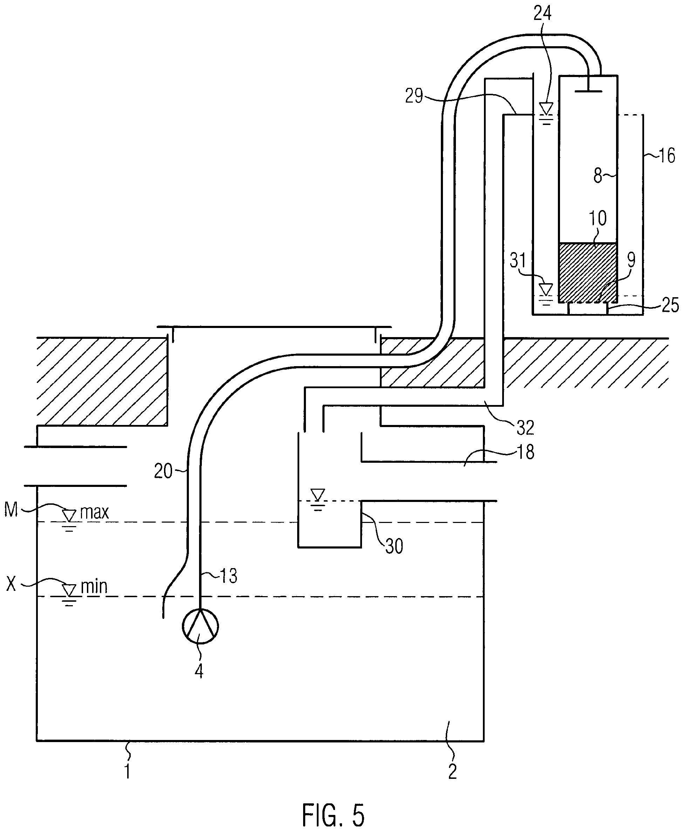

In der Ausführungsform in Fig. 5, die der Ausführungsform der Fig. 4 funktionell ähnlich ist, sind der Filter 8 und das Rückspülreservoir 16 außerhalb des Klärbeckens 2 (z.B. bei Erdeinbau der Kläranlage) verbaut. Dabei befindet sich der Filter 8 im Rückspülreservoir 16 auf Füßen 25. Von der Überlaufschwelle 29 erstreckt sich eine Leitung 32 zum Behälter 30, aus welchem der Ablauf 18 herausführt. Die Entlüftungsleitung 20 mündet unterhalb des minimalen Füllniveaus X. Die Funktion ist ähnlich wie in der Ausführungsform in Fig. 4.

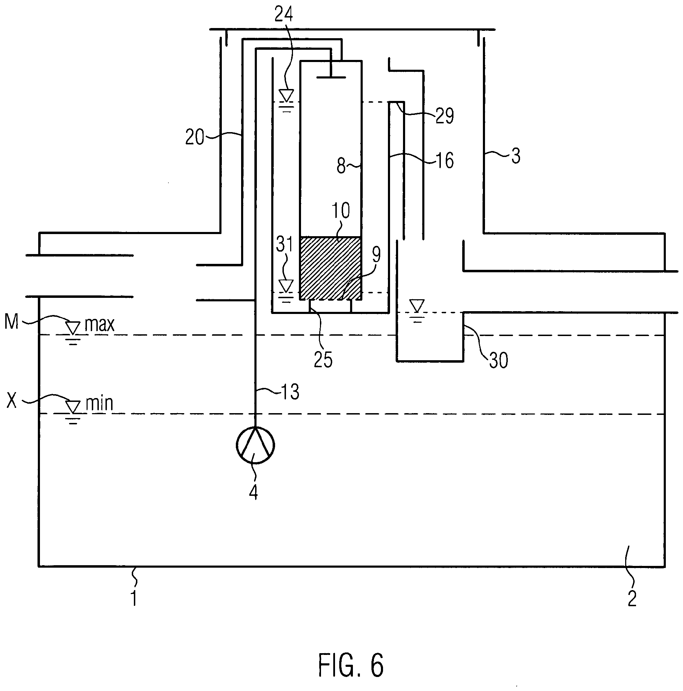

In der Ausführungsform in Fig. 6 sind das Rückspülreservoir 16 und der darin untergebrachte Filter 8 zum großen Teil im Dom 3 des Behälters 1 der Kläranlage verbaut. Der Aufbau entspricht weitestgehend dem in Fig. 5 und Fig. 4 gezeigten, wobei jedoch die Entlüftungsleitung 20 aus dem Freibord des Filters 8 nicht unterhalb des minimalen Füllniveaus X im Klärbecken 2 mündet, sondern in einem sicheren Abstand Z oberhalb der Höhe des Trägersiebs 9 des Filters 8, und oberhalb des maximalen Füllniveaus M im Klärbecken 2.

Die Positionierung und Dimensionierung der Entlüftungsleitung verhindert eine unkontrollierte Luftspülung der Filterschüttung 10, so dass die Filterschüttung als Mehrschichtfilterschüttung ausgelegt werden kann, die bei Spülzyklen nicht vermischt wird. Sobald nämlich das Niveau im Rückspülreservoir 16 bei einem Spülzyklus auf der Höhe der Mündung der Entlüftungsleitung 20 liegt, kehrt sich die Strömungsrichtung in der Entlüftungsleitung um. Dadurch dringt Luft ein und die Rückspülung wird unterbrochen, bevor Luft von unten durch das Trägersieb 9 in die Filterschüttung 10 eindringen kann. Das Niveau im Rückspülreservoir 16 könnte sogar bis zu 31 absinken, d.h., knapp oberhalb des Trägersiebs 9, um das Eindringen von Luft von unten in die Filterschüttung zu verhindern.

## Patentansprüche

1. Kläranlage (K), insbesondere Klein-Kläranlage, zum biologischen Behandeln von Abwasser, umfassend mindestens einen Klärbecken (2) vorgegeben mit einem maximalen Füllniveau (M) und einem minimalen Füllniveau (X), ein Rückspülreservoir (16), dessen Boden oberhalb des maximalen Füllniveaus (M) des Klärbeckens liegt, und einen dem Rückspülreservoir (16) zugeordneten Ablauf (18); ein Trägersieb (9), und eine Filterschüttung (10) in einem Filtergehäuse eines Filters (8), und einem oberhalb der Filterschüttung (10) vorgesehenen Freibord (11), mindestens eine einen Ansaugbereich und eine Druckseite aufweisende Pumpe (4) zum Abziehen von behandeltem Abwasser durch den Ablauf (18), die im Klärbetrieb das Abwasser aus dem Klärbecken (2) durch den Filter (8) und die Filterschüttung (10) und gefiltertes Abwasser nach oben in das Rückspülreservoir (16) pumpt, wobei gefiltertes Wasser über den Ablauf (18) abläuft, und wobei der Filter (8) mit im Rückspülreservoir (16) gespeichertem, gefiltertem Abwasser durch Schwerkraft rückspülbar ist, **dadurch gekennzeichnet, dass** im Klärbetrieb, der Filter (8) an die Druckseite der Pumpe (4) angeschlossen ist, dass an einen oberseitigen Anschluss (19) des Filters (8) eine Entlüftungsleitung (20) angeschlossen ist, die entweder unterhalb des minimalen Füllniveaus (X) des Klärbeckens (2) oder im Abstand oberhalb der Höhe des Trägersiebs (9) mündet, dass die Pumpe (4) eine abgeschaltet entgegengesetzt zur eigentlichen Pumprichtung durchströmbare Schmutzwasser-Strömungspumpe ist, und dass der Filter (8) bei abgeschalteter Pumpe durch die abgeschaltete Pumpe (4) hindurch in das Klärbecken (2) rückspülbar ist.

2. Kläranlage nach Anspruch 1, **dadurch gekennzeichnet, dass** der Filter (8) ein Einschicht- oder Mehrschicht-Schüttungsfilter mit einem oberhalb der Filterschüttung (10) vorgesehenen Freibord (11) ist.

3. Kläranlage nach Anspruch 2, **dadurch gekennzeichnet, dass** die Filterschüttung (10) Sand und/oder Kohle und/oder Glas und/oder Kunststoffgranulat aufweist.

4. Kläranlage nach Anspruch 1, **dadurch gekennzeichnet, dass** der Filter (8) oberhalb oder zum Teil unterhalb des maximalen Füllniveaus (M) des Klärbeckens (2) platziert ist.

5. Kläranlage nach Anspruch 1, **dadurch gekennzeichnet, dass** die Pumpe (4) entweder im Klärbecken (2) oder trocken verbaut ist.

6. Kläranlage nach Anspruch 1, **dadurch gekennzeichnet, dass** der Filter (8), das Rückspülreservoir (16) und der Ablauf (18) an einer Montageplatte (7) außerhalb des Klärbeckens (2) angeordnet sind.

7. Kläranlage nach wenigstens einem der vorhergehenden Ansprüche, **dadurch gekennzeichnet, dass** die Pumpe (4) über eine oben in den Freibord (11) des Filters (8) mündende Druckleitung (13) mit dem Filter (8), und der Filter (8) über eine unten angeschlossene Verbindungsleitung (15) mit dem daneben angeordneten Rückspülreservoir (16) verbunden sind, wobei, vorzugsweise, die Verbindungsleitung (15) einen Ablasshahn (H) enthält und die Verbindungsleitung (15) an das Rückspülreservoir (16) bodenseitig angeschlossen ist.

8. Kläranlage nach wenigstens einem der vorhergehenden Ansprüche, **dadurch gekennzeichnet, dass** der Filter (8) im Rückspülreservoir (16) angeordnet ist

9. Kläranlage nach wenigstens einem der vorhergehenden Ansprüche, **dadurch gekennzeichnet, dass** eine mit der Pumpe (4) verbundene Steuerung (CU) zur Taktung von Filter-Rückspülzyklen vorgesehen ist.

10. Kläranlage nach wenigstens einem der vorhergehenden Ansprüche, **dadurch gekennzeichnet, dass** der Filter (8) unten offen auf Füßen im Rückspülreservoir (16) steht.

11. Kläranlage nach Anspruch 4, **dadurch gekennzeichnet, dass** das mit dem darin untergebrachten Filter (8) Rückspülreservoir (16) einen bodenseitigen, bis unterhalb des minimalen Füllniveaus (X) des Klärbeckens (2) reichenden Topf (28) aufweist, in den vom Boden des Filters (8) (Fig. 2) ein Tauchrohr (27) bis unterhalb des minimalen Füllniveaus (X) des Klärbeckens (2) nach unten ragt.

12. Verfahren zum biologischen Behandeln von Abwasser in einer Kläranlage (K) gemäß den Ansprüchen 1-11, **dadurch gekennzeichnet, dass** nach Einschalten der Pumpe (4) Abwasser aus dem Klärbecken (2) von oben nach unten durch den Filter (8) in das Rückspülreservoir (16) und zum Ablauf (18) gepumpt und in dem Rückspülreservoir (16) eine Charge gefilterten Abwassers gespeichert wird, dass die Pumpe (4) in Absetz- oder Nachklär-Phasen der Kläranlage (K) abgeschaltet wird, und dass nach Abschalten der Pumpe (4) selbsttätig ein Filter-Rückspültakt ausgeführt wird, bei dem der Filter (8) von unten nach oben mit der Charge ausschließlich durch Schwerkraftwirkung durch die abgeschaltete Pumpe (4) in das Klärbecken (2) rückgespült wird.

13. Verfahren nach Anspruch 12, **dadurch gekennzeichnet, dass** das behandelte Abwasser mit einer Filtriergeschwindigkeit bis zu 300 m/h durch den Filter (8) gepumpt wird.

14. Verfahren nach Anspruch 12, **dadurch gekennzeichnet, dass** der Filter (8) jeweils nach 1,5 bis 7,5 min für etwa 1,0 bis 3,0 min rückgespült wird.

## Claims

1. Sewage plant (K), in particular small-size sewage plant, for biologically treating wastewater, comprising at least one sedimentation tank (2) having a given maximum wastewater level (M) and a minimum wastewater level (X), a back flush reservoir (16), the bottom of which is placed above the maximum wastewater level (M) of the sedimentation tank (2), and a drainage (18) associated to the back flush reservoir (16);
a carrier sieve (9) and a filter swell (10) in a filter housing of a filter (8), and a freeboard (11) above the filter swell (10), at least one pump (4) having a suction region and a pressure side for drawing-off treated wastewater through the drainage (18), the pump, pumping during a treatment process, the wastewater from the sedimentation tank (2) through the filter (8) and the filter swell (10) and pumping filtered wastewater upwardly into the back flush reservoir (16), from where filtered water is flowing-off via the drainage (18), and wherein the filter (8) can be back-flushed with filtered wastewater stored in the back flush reservoir (16) by gravity, **characterized in that** during the treatment process, the filter (8) is connected to the pressure side of the pump (4), that a vent line (20) is connected to a port (19) at the upper side of the filter (8), the vent line (20) being open either below the minimum wastewater level (X) of the sedimentation tank (2) or with distance above the elevation of the carrier sieve (9), that the pump (4) is a foul water-flow pump allowing a through flow counter to the actual pumping direction when switched-off, and that the filter (8) can be back flushed through the switched-off pump (4) when the pump (4) is switched-off.

2. Sewage plant according to claim 1, **characterized in that** the filter (8) is a single-layer swell filter or a multi-layer swell filter having the freeboard above the filter swell (10).

3. Sewage plant according to claim 2, **characterized in that** the filter swell (10) comprises sand and/or coal and/or glass and/or a plastic material granulate.

4. Sewage plant according to claim 1, **characterized in that** the filter (8) is placed either above or partially below the maximum wastewater level (M) of the sedimentation tank (2).

5. Sewage plant according to claim 1, **characterized in that** the pump (4) either is installed in the sedimentation tank (2) or is installed in dry operating condition.

6. Sewage plant according to claim 1, **characterized in that** the filter (8), the back flush reservoir (16) and the drainage (18) are arranged at a mounting plate (7) outside of the sedimentation tank (2).

7. Sewage plant according to at least one of the preceding claims, **characterized in that** the pump (4) is connected to the filter (8) by a pressure line (13) opening in elevated position in the freeboard (11) of the filter (8), and that the filter (8) is connected to the adjacently placed back flush reservoir (16) by a connecting line (15) connected to a low location of the back flush reservoir (16), wherein, preferably, the connecting line (15) contains a discharge valve (H) and the connecting line (15) is connected to the bottom of the back flush reservoir (16).

8. Sewage plant according to at least one of the preceding claims, **characterized in that** the filter (8) is arranged in the back flush reservoir (16).

9. Sewage plant according to at least one of the preceding claims, **characterized in that** a control device (CU) connected the pump (4) is provided for timing filter back flush cycles.

10. Sewage plant according to at least one of the preceding claims, **characterized in that** the filter (8) is open at the lower side and is standing on feet in the back flush reservoir (16).

11. Sewage plant according to claim 4, **characterized in that** the back flush reservoir (16) containing the filter (8) is equipped with a pot (28) at the bottom side, the pot (28) extending to below the minimum wastewater level (X) of the sedimentation tank, and that a diving tube (27) extends from the bottom of the filter (8) to below the minimum wastewater level (X) of the sedimentation tank.

12. Method for biologically treating wastewater in a sewage plant (K) according to claims 1 to 11, **characterized in that** after switching-on the pump (4) wastewater is pumped from the sedimentation tank (2) through the filter (8) from above to below and in the back flush reservoir (16) and to the drainage (18), that a charge of filtered wastewater is stored in the back flush reservoir (16), that the pump (4) is switched-off in settling phases or after-sedimentation phases of the sewage plant (K), and that after switching-off the pump (4) a filter back flush cycle is executed automatically, during which the filter (8) is back-flushed exclusively by the action of gravity from below to above with the charge and through the switched-off pump (4) into the sedimentation tank (2).

13. Method according to claim 12, **characterized in that** wastewater is pumped through the filter (8) with a filtering speed up to 300m/h.

14. Method according to claim 12, **characterized in that** the filter (8) is back-flushed during about 1,0 to 3,0 min, respectively after 1,5 to 7,5 min.

## Revendications

1. Station d'épuration (K), en particulier de petite taille, pour le traitement biologique des eaux usées, comprenant au moins un clarificateur (2) muni d'un niveau de remplissage maximal (M) et d'un niveau de remplissage minimal (X), un réservoir de lavage à contre-courant (16) dont le fond se situe au-dessus du niveau de remplissage maximal (M) du clarificateur, et un drain (18) associé au réservoir de lavage à contre-courant (16) ;
un tamis porteur (9), et un lit filtrant (10) présent au sein d'un boîtier de filtre d'un filtre (8), et un franc-bord (11) prévu au-dessus du lit filtrant (10),
au moins une pompe (4), présentant une zone d'aspiration et un côté de refoulement, destinée à l'évacuation des eaux usées traitées à travers le drain (18), qui, en cours de clarification, pompe les eaux usées hors du clarificateur (2) à travers le filtre (8) et le lit filtrant (10) et pompe les eaux usées filtrées vers le haut jusque dans le réservoir de lavage à contre-courant (16), dans laquelle de l'eau filtrée s'écoule par le drain (18), et dans laquelle le filtre (8) peut être lavé à contre-courant par gravité avec des eaux usées filtrées stockées dans le réservoir de lavage à contre-courant (16), **caractérisée en ce que,** en cours de clarification, le filtre (8) est raccordé au côté de refoulement de la pompe (4), **en ce qu'**une conduite de ventilation (20) est raccordée à une prise supérieure (19) du filtre (8) qui débouche au-dessous du niveau de remplissage minimal (X) du clarificateur (2) ou bien à une certaine distance au-dessus de la hauteur à laquelle se situe le tamis porteur (9), **en ce que** la pompe (4) est une pompe de relevage pour eaux usées pouvant être traversée à l'état arrêté dans le sens opposé au sens de pompage réel, et **en ce que** le filtre (8) peut être lavé à contre-courant dans le clarificateur (2) en traversant la pompe (4) à l'arrêt lorsque la pompe est arrêtée.

2. Station d'épuration selon la revendication 1, **caractérisée en ce que** le filtre (8) est un filtre à lit monocouche ou multicouche avec un franc-bord (11) prévu au-dessus du lit filtrant (10).

3. Station d'épuration selon la revendication 2, **caractérisée en ce que** le lit filtrant (10) présente du sable et/ou du charbon et/ou du verre et/ou des granules de matière plastique.

4. Station d'épuration selon la revendication 1, **caractérisée en ce que** le filtre (8) est placé au-dessus ou partiellement en dessous du niveau de remplissage maximal (M) du clarificateur (2).

5. Station d'épuration selon la revendication 1, **caractérisée en ce que** la pompe (4) est installée dans le clarificateur (2) ou bien se trouve au sec.

6. Station d'épuration selon la revendication 1, **caractérisée en ce que** le filtre (8), le réservoir de lavage à contre-courant (16) et le drain (18) sont agencés sur une plaque de montage (7) à l'extérieur du clarificateur (2).

7. Station d'épuration selon au moins l'une quelconque des revendications précédentes, **caractérisée en ce que** la pompe (4) est reliée au filtre (8) par l'intermédiaire d'une conduite de refoulement (13) débouchant en haut dans le franc-bord (11) du filtre (8), et le filtre (8) est relié, par l'intermédiaire d'une conduite de liaison (15) raccordée en bas, au réservoir de lavage à contre-courant (16) agencé à côté de ladite conduite, dans laquelle la conduite de liaison (15) contient de manière préférée un robinet de vidange (H) et la conduite de liaison (15) est raccordée au fond du réservoir de lavage à contre-courant (16).

8. Station d'épuration selon au moins l'une quelconque des revendications précédentes, **caractérisée en ce que** le filtre (8) est agencé dans le réservoir de lavage à contre-courant (16).

9. Station d'épuration selon au moins l'une quelconque des revendications précédentes, **caractérisée en ce qu'**une commande (CU) reliée à la pompe (4) est prévue pour la synchronisation des cycles de lavage à contre-courant de filtre.

10. Station d'épuration selon au moins l'une quelconque des revendications précédentes, **caractérisée en ce que** le filtre (8) se tient ouvert vers le bas sur des pieds au sein du réservoir de lavage à contre-courant (16).

11. Station d'épuration selon la revendication 4, **caractérisée en ce que** le réservoir de lavage à contre-courant (16) au sein duquel est logé le filtre (8) présente un pot (28) situé du côté fond, s'étendant jusqu'en dessous du niveau de remplissage minimal (X) du clarificateur (2), et au sein duquel un tube plongeur (27) descend à partir du fond du filtre (8) (Fig. 2) jusqu'en dessous du niveau de remplissage minimal (X) du clarificateur (2).

12. Procédé de traitement biologique des eaux usées dans une station d'épuration (K) selon les revendications 1 à 11, **caractérisé en ce que,** après mise en marche de la pompe (4), les eaux usées sont pompées hors du clarificateur (2) du haut vers le bas à travers le filtre (8) jusque dans le réservoir de lavage à contre-courant (16) et vers le drain (18) et une quantité d'eaux usées filtrées est stockée dans le réservoir de lavage à contre-courant (16), **en ce que** la pompe (4) est arrêtée lors de phases de décantation ou de clarification secondaire de la station d'épuration (K), et **en ce qu'**un cycle de lavage à contre-courant de filtre lors duquel le filtre (8) est lavé à contre-courant du bas vers le haut avec ladite quantité au sein du clarificateur (2) exclusivement par gravité à travers la pompe (4) arrêtée est mis en oeuvre de manière automatique après arrêt de la pompe (4).

13. Procédé selon la revendication 12, **caractérisé en ce que** les eaux usées traitées sont pompées à travers le filtre (8) à une vitesse de filtration allant jusqu'à 300 m/h.

14. Procédé selon la revendication 2, **caractérisé en ce que** le filtre (8) est à chaque fois lavé à contre-courant pendant environ 1,0 à 3,0 min après 1,5 à 7,5 min.
